# DEMANDE DE BREVET EUROPEEN

(11) **EP 4 482 159 A1**
(43) Date de publication de la demande: **25.12.2024**
(21) Numéro de dépôt: 24177071.8
(22) Date de dépôt: 21.05.2024
(51) Int. Cl.: H04N 21/442, H04N 21/472, H04N 21/845

(54) **PROCÉDÉ DE GESTION DE LA LECTURE D'UN CONTENU MULTIMÉDIA**

(30) Priorité: 20.06.2023 FR 2306356
(71) Demandeur: Orange, 92130 Issy-les-Moulineaux (FR)
(72) Inventeur: RIVOALEN, Mathieu, 92326 Chatillon (FR); MARCHAND, Hervé, 92326 Chatillon (FR)

(57) **Abrégé**

L'invention concerne un procédé de gestion de la lecture d'un contenu multimédia par un dispositif de lecture équipé d'un processeur et d'un lecteur de contenu (LCT) comprenant plusieurs fonctions de lecture (AX,PL,PS), caractérisé en ce que les fonctions de lecture disponibles du lecteur varient dans le temps

## Description

### Domaine technique

Le domaine de l'invention est celui des contenus multimédias numériques, à savoir les contenus audio et/ou vidéo numériques, également appelés contenus audiovisuels.

L'invention se rapporte tout particulièrement à un procédé de gestion de lecture d'un contenu multimédia par un dispositif de lecture.

Un dispositif de lecture vise en particulier tout dispositifs aptes à recevoir un flux multimédia, notamment sous forme de segments, par exemple un décodeur, un téléphone mobile, une tablette, etc., et à lire le flux reçu en vue d'une restitution.

Un contenu est par exemple un contenu diffusé en temps réel appelé aussi contenu « live » par l'homme du métier, un contenu de télévision à la demande, un contenu de vidéo à la demande, etc.

### Etat de la technique

Il existe aujourd'hui de nombreux dispositifs de lecture de contenus audiovisuels permettant à un utilisateur d'accéder à des contenus multimédias (programmes télévisés, vidéo à la demande VOD (sigle anglosaxon de « Video On Demand »), télévision à la demande TVOD (sigle anglosaxon de « Transactional Video on Demand »), etc.).

Les dispositifs de lecture actuels incluent un voire plusieurs modules de lecture, appelé aussi lecteurs dans la suite, capables de recevoir un contenu numérique sous forme de données multimédia et de requérir une restitution sur un dispositif de restitution.

Il existe plusieurs types de lecteurs de contenus offrant via un menu restitué sur un écran des fonctions liées à la lecture telles qu'un affichage d'une barre progression de la lecture, des commandes telles que les commandes « Play », « Pause », « retour rapide » (symbole < <), « avance rapide » (symbole >>), etc.) présentées sur une interface Homme-Machine sous forme de menu. Du fait de la diversité des fonctions, et des consommations respectives en ressource processeur des fonctions, un lecteur de contenus consomme plus ou moins de ressource processeur à un instant donné (on parlera aussi de charge CPU dans la suite).

En fonction du type de contenu à lire et du type de lecteur, il arrive que la charge CPU soit excessive. Par exemple, à un instant donné, si le lecteur comporte un menu avec beaucoup de fonctions en cours d'utilisation comme une barre de progression, une commande d'avance rapide en cours d'exécution associée à une restitution d'imagettes extraites du contenu en cours de lecture, imagettes qui évoluent dans le temps pour indiquer un état d'avancement de la lecture rapide ; toutes ces fonctions en cours d'utilisation sont consommatrices en ressource processeur et peuvent de ce fait engendrer une surcharge CPU ; et, si en plus le contenu en cours de lecture est restitué en arrière-plan simultanément avec le menu, ajoutant de ce fait une charge CPU supplémentaire dédiée à la restitution de cette vidéo en arrière-plan, il s'ensuit une charge CPU qui peut avoisiner parfois 90%. Il résulte de cette surconsommation des problèmes de restitution du contenu (pixellisations, ralentissements) voire une coupure de la restitution ce qui n'est pas du tout acceptable en termes de qualité de services.

L'invention vient améliorer la situation.

### L'invention

A cet effet, selon un aspect fonctionnel, l'invention a pour objet un procédé de gestion de la lecture d'un contenu multimédia par un dispositif de lecture équipé d'un processeur et d'un lecteur de contenu comprenant plusieurs fonctions de lecture, caractérisé en ce que les fonctions de lecture disponibles du lecteur varient dans le temps.

Selon l'invention, la configuration du lecteur varie dans le temps lors de la lecture d'un même contenu. Cette possibilité de rendre disponible ou indisponible des fonctions plus ou moins consommatrices en ressource processeur los de la lecture d'un même contenu permet de maîtriser la consommation de la ressource processeur et donc d'éviter une surcharge de cette ressource.

A noter qu'une fonction disponible vise une donnée représentative d'une information et/ou une commande exécutable. Comme on le verra plus tard, une information est par exemple un affichage d'une barre de progression de la lecture d'un contenu ; une commande est par exemple une commande de lecture, de pause, de retour en arrière, etc.

Selon un premier mode de réalisation, une fonction de lecture étant apte à être restituée sur un dispositif de restitution, seule une fonction disponible est restituée sur l'écran. Ce premier mode permet de diminuer le nombre de fonctions restituées sur l'écran à celles qui sont disponibles facilitant ainsi, du fait de la réduction du nombre de fonctions, la sélection d'une fonction sur un écran par un utilisateur.

Selon un deuxième mode de réalisation, qui pourra être mis en oeuvre alternativement ou cumulativement avec le précédent, les fonctions sont restituées indépendamment de leurs disponibilités respectives ; et les fonctions indisponibles sont inhibées à la sélection. Par exemple, lorsque la fonction est une information restituée sur un écran, celle-ci reste figée sur l'écran ; par exemple dans le cas d'une barre de progression affichée sur un écran, cette dernière n'indique plus l'avancée de la lecture ; lorsque la fonction est une commande apte à être sélectionnée sur l'écran, celle-ci, bien que restituée, ne peut pas être sélectionnée et exécutée.

Selon un troisième mode de réalisation, qui pourra être mis en oeuvre alternativement ou cumulativement avec les précédents, la disponibilité d'une fonction est fonction d'un type de contenu à lire. Ce mode simple se contente d'identifier le type de contenu (contenu diffusé en temps réel, vidéo à la demande, etc.) et de sélectionner les fonctions disponibles par exemple un lecteur offrant des commandes adaptées au contenu à lire ; si le contenu est un contenu à la demande, les fonctions disponibles sélectionnées seront adaptées à ce type de contenus à savoir une fonction de retour ou d'avance, de pause, etc.

Selon un quatrième mode de réalisation, qui pourra être mis en oeuvre alternativement ou cumulativement avec les précédents, la disponibilité d'une fonction est fonction d'un contexte d'exécution lié à la lecture du contenu.

Selon une première variante de ce quatrième mode, le contexte d'exécution inclut un affichage d'un menu incluant des fonctions sur un écran en complément du contenu en cours de restitution. Ici, le menu incluant les fonctions et le contenu sont restitués simultanément. Une telle configuration entraîne une charge CPU parfois trop importante. Grâce à cette variante, lorsqu'il y a restitution simultanée d'un menu et d'un contenu, des fonctions sont automatiquement rendues indisponibles afin de libérer de la ressource processeur et ainsi assurer une restitution du contenu sans dégradation.

Selon une deuxième variante de ce quatrième mode, le contexte d'exécution est lié à une quantité courante d'utilisation de la ressource processeur. Dans ce mode, une charge CPU donnée peut être à l'origine du déclenchement d'une disponibilité ou d'une indisponibilité de fonctions. Par exemple si une charge CPU maximum est fixée à 80% (la quantité pourrait être exprimée dans une unité autre que me pourcentage), si la quantité courante est à 85%, certaines fonctions sont rendues indisponibles afin d'anticiper un problème de surcharge CPU.

Ayant plusieurs fonctions à disposition consommant chacune plus ou moins la ressource processeur, ce quatrième mode et les variantes associées permettent de diminuer la charge CPU assurant ainsi une restitution du contenu sans dégradation.

Selon un cinquième mode de réalisation, qui pourra être mis en oeuvre alternativement ou cumulativement avec les précédents, une fonction est disponible suite à une activation de la fonction. Selon ce mode, la disponibilité d'une fonction repose sur une instanciation de lecteur.

Selon un sixième mode de réalisation, qui pourra être mis en oeuvre alternativement ou cumulativement avec les précédents, les fonctions sont activées ou désactivées successivement jusqu'à obtention d'une quantité d'utilisation donnée de la ressource processeur. La disponibilité repose sur un principe simple à mettre en oeuvre qui consiste à activer ou désactiver les fonctions les unes après les autres et vérifier si la charge CPU atteint une valeur donnée au fur ; dès que la valeur donnée de charge CPU est atteinte, l'entité de gestion cesse d'activer ou de désactiver des fonctions. Ce mode évide d'activer ou de désactiver plusieurs fonctions en bloc qui entrainerait une indisponibilité de fonctions pouvant être utiles.

Selon une variante du sixième mode de réalisation, les fonctions sont classées selon leurs consommations respectives en ressources processeur ; les activations ou désactivations successives s'effectuent selon ce classement jusqu'à obtention d'une quantité d'utilisation donnée de la ressource processeur. Dans ce sixième mode, les consommations en ressource processeur sont estimées au préalable et classées hiérarchiquement et servent ensuite les activations ou désactivations. Ce mode vise à réduire la consommation de la ressource processeur pour qu'elle soit disponible pour des tâches informatiques autres que la lecture en cours.

Selon une variante du sixième mode de réalisation, les fonctions sont classées par préférence ; les activations ou désactivations successives s'effectuant selon le classement. Ce mode permet, lorsque la ressource processeur est trop occupée, de désactiver des fonctions en suivant un ordre de préférence, par exemple en commençant par la fonction la moins préférée. On comprend que malgré une réduction de fonctions, les fonctions qui resteront disponibles seront des fonctions classées parmi les plus préférées. A l'inverse, si le nombre de fonction augmente, on sélectionne selon l'ordre de préférence, donc par exemple en premier lieu une fonction préférée.

Selon un aspect matériel, l'invention se rapporte à une entité de gestion de la lecture d'un contenu multimédia par un dispositif de lecture équipé d'un processeur et d'un lecteur de contenu comprenant plusieurs fonctions de lecture, caractérisé en ce que le processeur est configuré pour faire varier les fonctions de lecture disponibles du lecteur dans le temps lors de la lecture du contenu.

Selon un autre aspect matériel, l'invention se rapporte à un décodeur comprenant une entité de gestion telle que définie ci-dessus.

Selon un autre aspect matériel, l'invention se rapporte à un programme d'ordinateur apte à être mis en oeuvre sur une entité telle que définie ci-dessus, le programme comprenant des instructions de code qui, lorsqu'il est exécuté par un processeur, réalise les étapes du procédé de sélection définies ci-dessus.

Enfin, selon un autre aspect matériel, l'invention se rapporte à un support de données sur lequel a été mémorisée au moins une série d'instructions de code de programme pour l'exécution d'un procédé de gestion tel que défini ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargé sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé de contrôle d'affichage précité.

L'invention sera mieux comprise à la lecture de la description qui suit, donnée à titre d'exemple et faite en référence aux dessins annexés sur lesquels :
[Fig. 1] La figure 1 représente un système informatique sur lequel est illustré un exemple de réalisation de l'invention.
[Fig. 2] La figure 2 est un schéma synoptique simplifié de la structure matérielle du dispositif du dispositif de lecture
[Fig. 3] La figure 3 illustre un mode réalisation dans lequel les fonctions disponibles sont fonction de la charge du processeur ; cette figure fait apparaître deux états du lecteur à deux instants distincts.

### Description détaillée d'un exemple de réalisation illustrant l'invention :

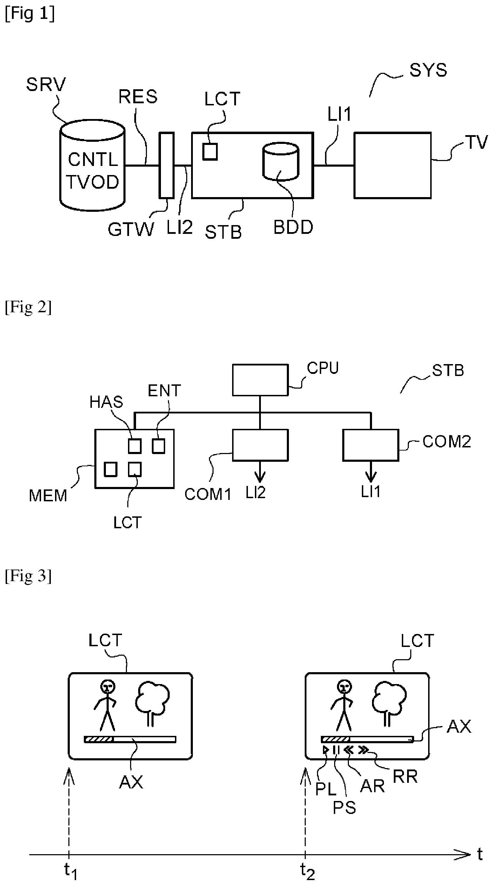

En référence à la figure 1, le système informatique SYS comprend un dispositif de lecture de flux multimédia STB, par exemple un décodeur connecté à un dispositif de restitution TV. Précisons ici que le dispositif de lecture décodeur STB et le dispositif de restitution peuvent former qu'un seul et même équipement.

Dans notre exemple, le dispositif de lecture STB est connecté sur un port du dispositif de restitution dispositif de restitution TV via une liaison filaire LI1 du type HDMI. Cette liaison pourrait très bien être non filaire, en Wi-Fi par exemple.

Dans notre exemple, le dispositif de lecture STB est situé dans un réseau local LAN géré par une passerelle domestique GTW.

Sur la figure 1, la liaison entre le dispositif de lecture STB et la passerelle est référencée LI2.

La passerelle GTW est apte à communiquer via un réseau de télécommunication RES tel qu'un réseau étendu WAN connu de l'homme du métier.

Un serveur de contenus numériques SRV se trouve dans notre exemple dans le réseau étendu RES. Le serveur de contenus SRV reçoit par exemple des chaînes de contenus de télévision numérique CNTL, appelées contenus « Live » par l'homme du métier » en provenance d'un réseau de télévision diffusée (non représenté), et/ou des vidéos à la demande TVOD, et les met à disposition des terminaux clients, ici le dispositif de lecture STB.

Dans notre exemple, le dispositif de lecture STB est un client. Il est fréquent, dans ce contexte client-serveur, de recourir, pour échanger les données entre le terminal client STB et le serveur de contenus SRV, à une technique de téléchargement progressif adaptatif, en anglais « adaptive streaming », abrégé en HAS basée sur le protocole HTTP. Ce type de technique permet notamment d'offrir une bonne qualité de contenus à l'utilisateur en tenant compte des variations de bande passante qui peuvent se produire sur la liaison entre le terminal client STB et la passerelle de services GTW, et/ou entre la passerelle GTW et le serveur de contenus SRV.

La figure 2 représente une architecture d'un dispositif de lecture STB. Ce dispositif STB comprend, classiquement, des mémoires MEM associées à un processeur CPU. Les mémoires peuvent être de type ROM (de l'anglais « Read Only Memory ») ou RAM (de l'anglais « Random Access Memory ») ou encore Flash.

Le décodeur STB comprend une mémoire tampon appelée aussi antémémoire ou « buffer » par l'homme du métier.

Le décodeur STB peut transmettre un contenu à restituer au dispositif de restitution TV via un module de communication COM2. Ce module COM2 est par exemple une liaison HDMI.

Le décodeur STB communique avec la passerelle via un module Ethernet pour une communication locale filaire ou via un module radio de type WiFi pour une communication locale sans fils. Le module en question est référencé COM1 sur la figure 2.

Dans notre exemple, le dispositif de lecture STB comprend un module de téléchargement apte à gérer le téléchargement en mode adaptative streaming et donc apte à requérir un téléchargement progressif de l'un des contenus à l'une des qualités proposées dans un fichier de description. Le fichier de description peut être téléchargé et enregistré par exemple dans la mémoire MEM du décodeur STB ou se trouver hors du décodeur STB.

Classiquement, comme on le verra en référence à la figure 3, différentes qualités peuvent être encodées pour le même contenu d'une chaîne, correspondant par exemple à différents débits d'encodage. Plus généralement, on parlera de qualité pour se référer à une certaine résolution du contenu numérique (résolution spatiale, temporelle, niveau de qualité associée à la compression vidéo et/ou audio) avec un certain débit d'encodage. Chaque niveau de qualité est lui-même découpé sur le serveur de contenus en segments temporels (ou « segments » de contenu, en anglais « chunks », ces trois mots étant utilisés indifféremment dans l'ensemble de ce document).

Dans notre exemple, le système SYS comprend en outre un encodeur et un générateur de fichier de description également non représentés car sans intérêt pour l'exposé de l'invention. L'encodeur a pour rôle d'encoder un contenu numérique afin d'obtenir plusieurs segments et plusieurs représentations pour chaque segment.

Nous ne rentrerons pas plus dans les détails de la technique de téléchargement en adaptative streaming car sans intérêt pour l'exposé de l'invention.

Précisons aussi ici que l'invention ne se limite pas à au mode de téléchargement en mode adaptative streaming ; d'autres modes peuvent être utilisés pour la mise en oeuvre de l'invention tels que le mode IPTV (sigle de « Internet Protocol TeleVision ») qui utilise la technologie Internet pour diffuser des programmes télévisés.

Le dispositif de lecture STB comprend en outre une entité de gestion ENT, objet de l'invention, dont la fonction sera expliquée ci-après.

Dans notre exemple, le module de téléchargement en mode adaptative streaming est inclus dans l'entité de gestion ENT.

Le dispositif de lecture STB comprend aussi un lecteur LCT apte à afficher un menu comprenant des fonctions telles que la commande « Play », la commande retour en arrière (symbole <<) en arrière, la commande « Pause », etc.

Le décodeur STB peut aussi comprendre d'autres modules comme un disque dur (non représenté) pour le stockage des segments vidéo, etc.

Dans notre exemple, le dispositif de lecture STB peut entrer en communication avec le serveur de contenus SRV pour recevoir des segments d'un contenu (films, documentaires, séquences publicitaires, etc.).

L'entité de gestion ENT comprend un module de lecture LCT, appelé lecteur dans le présent texte, qui a pour fonction de lire un contenu reçu par le dispositif de lecture STB. Dans notre exemple, le lecteur LCT reçoit de segments, les décode et requiert une restitution des segments décodés.

Le lecteur LCT en question comprend un menu avec plusieurs fonctions liées à la lecture. Dans notre exemple, certaines fonctions ont une influence sur la lecture ; d'autres informatives n'ont pas d'influence sur la lecture, par exemple une barre de progression informant sur l'état d'avancement de la lecture.

Une fonction ayant une influence sur la lecture vise par exemple des commandes telles qu'une commande de lecture d'un contenu, une commande de retour en arrière (souvent symbolisé par <<), une commande d'avance rapide (>>), une commande d'arrêt de lecture, etc. Une fonction ne vise pas que des commandes mais vise aussi par exemple une information restituée sur l'écran telle que l'heure courante, une barre de progression représentative d'un état d'avancement de la lecture du contenu courant, etc.

Toutes ces fonctions consomment de la ressource processeur lorsqu'elles sont exécutées.

Selon l'invention, afin d'anticiper au mieux la consommation de cette ressource, le dispositif de lecture, sous-entendu l'entité de gestion ENT, gère la disponibilité des fonctions au fil du temps. En d'autres mots, les fonctions de lecture disponibles à un instant donné varient dans le temps. De cette manière lorsqu'une ou plusieurs fonctions deviennent indisponibles, par exemple celles-ci ne sont plus exécutables dans le cas d'une fonction de type commande.

Dans notre exemple, la gestion de la disponibilité s'effectue en activant ou désactivant des fonctions. La possibilité d'activer une fonction liée à la lecture d'un contenu permet d'instancier le lecteur LCT à souhait et à tout moment, c'est-à-dire avant la lecture d'un contenu ou pendant la lecture du contenu.

La figure 3 illustre une vue d'une évolution dans le temps des fonctions disponibles du lecteur LCT.

Deux instants t1 et t2 sont représentés sur cette figure 3, auxquels correspondent des états fonctionnels respectifs du lecteur LCT.

Dans notre exemple, à l'instant t1, le lecteur LCT affiche un menu MEN affichant comme fonction tout simplement un axe temporel AX montrant l'état d'avancement de lecture. Cet axe est une fonction informative.

Dans notre exemple, à un autre instant t2, le tecteur LCT active d'autres fonctions et affiche le menu résultant affichant plusieurs fonctions activées à savoir
- un axe temporel AX comme pour le premier lecteur et d'autres fonctions exécutables à savoir :
- une touche PL pour démarrer la lecture si celle-ci s'est arrêtée ;
- une touche pause PS ;
- une touche avance/retour rapide AR/RR
- un affichage d'une image associé à l'instant courant de lecture.

Dans notre exemple, on part du principe que plus le menu a de fonctions activées, plus la charge CPU est élevée.

Selon l'invention, l'entité de gestion ENT gère la sélection des fonctions à activer ou désactiver du lecteur LCT.

Le choix des fonctions à utiliser dépendra d'un contexte d'exécution lié à la lecture, par exemple de la charge de la ressource processeur, et/ou d'un type de contenu à lire. Par exemple, si la charge processeur courante est supérieure à 80%, seule l'axe AX est restitué ; Si la charge est inférieure à 80%, toutes les fonctions sont activées et sont donc disponibles.

Les étapes peuvent être les suivantes :
Lors d'une première étape, le dispositif de lecture STB requiert un accès à un contenu Live, par exemple en mode adaptative streaming de la façon indiquée ci-dessus.

Dans notre exemple, lors d'une deuxième étape, une entité ENT détermine le type de contenu et sélectionne des fonctions adaptées à la lecture de ce type de contenus.

La détermination du menu et donc des fonctions à activer ou à désactiver peut-être réalisée en consultant une base de données BDD. Dans notre exemple, la base de données BDD indique les fonctions à activer et à désactiver en fonction de la quantité d'utilisation de la ressource processeur et du type de contenu à lire.

On verra dans la suite que l'activation et la désactivation peut s'effectuer
- par groupe de fonctions ; en d'autres mots, plusieurs fonctions sont activées ou désactivées en même temps.
- ou fonction par fonction les unes après les autres jusqu'à atteindre une charge CPU souhaitée.

On considère que les fonctions possibles pour un contenu à la demande TVOD sont les fonctions F1-F3. Supposons que les fonctions F1 à F3 sont les suivantes :
Une première fonction F1 correspond à l'axe temporel AX comme pour le premier lecteur et d'autres fonctions à savoir :
Une deuxième fonction F2 correspond à la touche pause PS ;
Une troisième fonction F3 correspond à la touche retour rapide RR
Dans notre exemple, La base de données BDD comprend les valeurs suivantes :

| CPU/Type (Fn) | <80% | ≥ 80% |
|---|---|---|
| TVOD (F1,F2,F3) | F1,F2,F3 | F1 |

indiquant que :
si la charge CPU est inférieur à 80% et que le contenu est un contenu de télévision à la demande, toutes les fonctions F1 à F3 sont disponibles ;
si la charge CPU est supérieure ou égale à 80% et que le contenu est un contenu de télévision à la demande, seule la fonction F1 est disponible.

Selon un premier mode de réalisation, comme indiqué précédemment, les fonctions sont activées/désactivées par groupe de fonctions.

Lors d'une troisième étape, l'entité de gestion ENT identifie le type de contenu sélectionné CNTL, dans notre exemple un contenu à la demande de type TVOD.

Ensuite, lors d'une quatrième étape, l'entité de gestion ENT obtient la charge CPU à un instant t. Supposons que la charge CPU est de 85% à cet instant ; dans ce cas, l'entité de gestion ENT détecte que la charge CPU est supérieure à la charge de 80% maximale et active la fonction F1 uniquement. A ce stade, un utilisateur ne peut pas agir sur la lecture par exemple en accélérant la lecture, la fonction F3 associée étant désactivée.

A noter qu'à la place du taux d'utilisation du processeur, l'entité ENT peut se baser sur d'autres données telles que le débit d'encodage des segments reçus pour déterminer les fonctions à activer et/ou désactiver. En effet, la plupart du temps, la consommation en ressource processeur varie linéairement avec le débit d'encodage.

Dans notre exemple, l'entité ENT vérifie très souvent la charge du processeur CPU, par exemple périodiquement toutes les secondes.

On suppose qu'à un instant donné t ultérieur, lors d'une cinquième étape, l'entité de gestion ENT détecte que la charge CPU baisse à 40%. L'entité de gestion ENT vérifie dans la base de données quelles fonctions doivent être activées ou désactivées avec une charge de 40%. Vu la configuration courante du lecteur, la fonction F1 étant activée, l'entité de gestion ENT active le groupe de fonctions F2 et F3. A ce stade, les fonctions F1-D3 sont activées.

Comme indiqué précédemment, l'activation et la désactivation peut s'effectuer aussi fonction par fonction. Par exemple, les fonctions F1 à F3 sont activées ou désactivées les après les autres jusqu'à obtention d'une charge CPU souhaitée.

Aussi, selon une variante, les fonctions Fn (n=1,2,3) dans la base de données peuvent être classées au préalable selon leurs consommations respectives en ressource processeur lorsqu'elles sont exécutées. Les consommations respectives peuvent être obtenues lors de tests réalisés au préalable. De cette manière, lorsque des fonctions doivent être activées ou désactivées les unes après les autres, les activations/désactivations successives s'effectuent en respectant le classement établi.

On suppose par exemple, en reprenant l'exemple qui précède, considérons que la fonction F3, une fois exécutée, consomme plus que la fonction F2 qui elle-même consomme plus que la fonction F1 lorsqu'elle est exécutée. Dans cette configuration, lorsque la charge CPU est supérieure à 80%, l'entité de gestion ENT commence par désactiver la fonction qui consommerait le plus de ressource processeur et obtient après désactivation une charge CPU donnée.

Deux cas se présentent suite à la désactivation :
Soit la charge CPU baisse à moins de 80% ; dans ce cas, le procédé s'arrête à ce moment-là. A ce stade, les fonctions F1 et F2 sont activées et la fonction F3 désactivée.

Soit la charge CPU est toujours supérieur à 80% ; dans ce cas, l'entité de gestion ENT poursuit la désactivation et désactive la deuxième fonction F2 afin de diminuer la charge CPU. On suppose que la charge CPU résultant de cette désactivation baisse à 45% en dessous du seuil fixé de 80% ; dans ce cas, le procédé s'arrête à ce moment-là. A ce stade, la fonction F1 est la seule fonction activée.

Aussi, l'activation ou la désactivation d'une fonction peut prendre plusieurs formes.

Selon une variante, une fonction disponible, donc activée, est restituée sur une interface et une fonction désactivée n'est pas restituée. Cette variante allège le nombre de fonctions restituées sur un écran ; l'expérience utilisateur ne peut être que meilleure.

Selon une autre variante, une fonction activée est restituée sur une interface, et une fonction désactivée est restituée et inhibée sur l'interface. Cette variante est intéressante en ce qu'elle présente, malgré les désactivations, les fonctions désactivées ; un utilisateur visualisant l'interface frustré de ne pas pouvoir accéder à l'ensemble des fonctions peut agir sur la charge CPU en arrêtant des programmes en cours d'exécution sur le dispositif de lecture STB et ainsi augmenter le nombre de fonctions disponibles.

A noter enfin que les modes de réalisation décrits ci-dessus sont basés sur une charge CPU. Cependant, d'autres ressources peuvent être pris en considération comme la ressource batterie.

Précisons enfin ici que le terme « module » ou le terme « entité » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en oeuvre une fonction ou un ensemble de fonctions telles que décrites pour les modules concernés. De la même manière, un composant matériel correspond à tout élément d'un ensemble matériel (ou hardware) apte à mettre en oeuvre une fonction ou un ensemble de fonctions pour le module concerné (circuit intégré, carte à puce, carte à mémoire, etc.).

## Revendications

1. Procédé de gestion de la lecture d'un contenu multimédia par un dispositif de lecture (STB) équipé d'un processeur (CPU) et d'un lecteur de contenu (LCT) comprenant plusieurs fonctions de lecture (AX,PL,PS), **caractérisé en ce que** les fonctions de lecture disponibles du lecteur varient dans le temps.

2. Procédé de gestion selon la revendication 1, **caractérisé en ce qu'**une fonction de lecture est apte à être restituée sur un dispositif de restitution, et **en ce que** seule une fonction disponible est restituée sur l'écran.

3. Procédé de gestion selon la revendication 1, **caractérisé en ce que** les fonctions sont restituées indépendamment de leurs disponibilités respectives, et **en ce que** les fonctions indisponibles sont inhibées à la sélection.

4. Procédé de gestion selon la revendication 1, **caractérisé en ce que** la disponibilité d'une fonction est fonction d'un type de contenu à lire.

5. Procédé de gestion selon la revendication 1, **caractérisé en ce que** la disponibilité d'une fonction est fonction d'une quantité courante d'utilisation de la ressource processeur.

6. Procédé de gestion selon la revendication 1, **caractérisé en ce qu'**une fonction est disponible suite à une activation de la fonction.

7. Procédé de gestion selon la revendication 6, **caractérisé en ce que** les fonctions sont activées ou désactivées successivement jusqu'à obtention d'une quantité d'utilisation donnée de la ressource processeur.

8. Procédé de gestion selon la revendication 7, **caractérisé en ce que** les fonctions sont classées selon leurs consommations respectives de ressource processeur et **en ce que** les activations ou désactivations successives s'effectuent selon le classement.

9. Procédé de gestion selon l'une des revendication 7 ou 8, **caractérisé en ce que** les fonctions sont classées par préférence, et **en ce que** les activations ou désactivations successives s'effectuant selon le classement.

10. Entité de gestion (ENT) de la lecture d'un contenu multimédia par un dispositif de lecture équipé d'un processeur et d'un lecteur de contenu comprenant plusieurs fonctions de lecture, **caractérisé en ce que** le processeur est configuré pour faire varier les fonctions de lecture disponibles du lecteur dans le temps lors de la lecture du contenu.

11. Décodeur (STB) comprenant une entité de gestion (ENT) telle que définie dans la revendication 11.

12. Programme d'ordinateur apte à être mis en œuvre sur une entité de gestion (ENT) telle que définie dans la revendication 11, le programme comprenant des instructions de code qui, lorsqu'il est exécuté par un processeur, réalise les étapes du procédé définies dans la revendication 1.

13. Support de données sur lequel a été mémorisée au moins une série d'instructions de code de programme pour l'exécution d'un procédé selon la revendication 1.
